## Europäisches Patentamt
## European Patent Office
## Office européen des brevets

(19)

(11) Veröffentlichungsnummer : **0 375 848 B1**

(12) **EUROPÄISCHE PATENTSCHRIFT**

(45) Veröffentlichungstag der Patentschrift :
**18.03.92 Patentblatt 92/12**

(51) Int. Cl.$^5$ : **F04B 43/06,** F04B 13/00,
G01F 11/06

(21) Anmeldenummer : **89117999.6**

(22) Anmeldetag : **28.09.89**

(54) **Dosierpumpe.**

(30) Priorität : **30.12.88 DE 8816172 U**

(43) Veröffentlichungstag der Anmeldung :
**04.07.90 Patentblatt 90/27**

(45) Bekanntmachung des Hinweises auf die
Patenterteilung :
**18.03.92 Patentblatt 92/12**

(84) Benannte Vertragsstaaten :
**CH FR IT LI NL**

(56) Entgegenhaltungen :
**EP-A- 0 148 691
EP-A- 0 175 105**

(73) Patentinhaber : **ALLTECH DOSIERANLAGEN
GMBH
Rudolf-Diesel-Strasse 2
W-7504 Weingarten (DE)**

(72) Erfinder : **Martin, Hans
Wiesenstrasse 35
W-7504 Weingarten (DE)**

(74) Vertreter : **Brommer, Hans Joachim, Dr.-Ing. et
al
Patentanwälte Dipl.-Ing. R. Lemcke Dr.-Ing.
H.J. Brommer Bismarckstrasse 16 Postfach
4026
W-7500 Karlsruhe 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 375 848 B1

## Beschreibung

Die Erfindung betrifft eine Dosierpumpe mit einem hohlen Hubkolben, dessen Innenraum über Steuerbohrungen mit dem Innenraum des Pumpengehäuses in Verbindung steht, wobei das Pumpengehäuse aus einem Getriebegehäuse mit dem Pumpenantrieb und einem daran angeflanschten, den Hubkolben führenden Kolbenflansch besteht, der seinerseits einen Dosierkopf trägt, in dem das Fördermedium strömt, das durch ein dichtes elastisches Element, insbesondere eine Membran, von einer im Pumpengehäuse zirkulierenden, die Dosierung des Fördermediums wirkenden Betriebsflüssigkeit getrennt ist, wobei die Dosierleistung durch einen Steuerschieber verstellbar ist, der die Steuerbohrungen des Hubkolbens ab einer bestimmten Hubposition verschließt und wobei die Verstellung des Steuerschiebers durch ein das Pumpengehäuse durchquerendes Stellglied erfolgt.

Derartige Dosierpumpen sind in zahlreichen Bauformen bekannt (z.B. EP-A2-0148 691). Dabei wird der Hubkolben von dem Antriebsmotor, im allgemeinen über einen Excenter, in eine hin- und her gehende Bewegung versetzt, wodurch die Betriebsflüssigkeit im Pumpengehäuse umgewälzt wird. So lange die Steuerbohrungen des Hubkolbens offen sind, hat diese Umwälzströmung keinen Einfluß auf die Membran und damit auf die Dosierung des Fördermediums. Ab einer bestimmten Hubstellung werden die Steuerbohrungen durch den feststehenden Steuerschieber verschlossen und die im inneren im Hubkolben befindliche Betriebsflüssigkeit drückt dann die Membran in den Dosierkopf hinein, so daß eine bestimmt Menge Forderflüssigkeit über das Druckventil in die Förderleitung gedrückt wird.

Beim anschließenden Rückhub wird die Membran in ihrer Ausgangslage zurückgezogen und über ein Saugventil wird die gleiche Menge an Förderflüssigkeit in den Dosierkopf hineingesaugt.

Zur Steuerung der Dosierleistung kann der den Hubkolben umgebende Steuerschieber mittels eines Stellgliedes axial verschoben werden. Dieses Stellglied ist bei den bekannten Dosierpumpen im Getriebegehäuse gelagert und steht über eine Verzahnung mit dem Steuerschieber in Eingriff. Dadurch läßt sich die Dosierleistung linear im Bereich von 0 bis 100 % verändern.

Die Einbaulage der Dosierpumpe ist in der Praxis vorgegeben durch die Position der Rohranschlüsse des Fördermediums, wobei man aus Gründen der Funktionssicherheit grundsätzlich anstrebt, daß das Fördermedium den Dosierkopf von unten nach oben durchströmt. Der an das Getriebegehäuse angeflanschte Antriebsmotor ist grundsätzlich nach oben angebaut, damit keine aufwendigen Dichtungsmaßnahmen gegen über der im Pumpeninneren zirkulierenden Betriebsflüssigkeit notwendig sind.

Aufgrund dieser Gegebenheiten können die Dosierpumpen bei den meisten Einbaufällen nur in einer bestimmten Einbauposition montiert werden, wogegen es aus Gründen des Platzbedarfes und der Zugänglichkeit häufig wünschenswert wäre, die Pumpe in einer anderen Lage oder Ausrichtung einzubauen.

Der vorliegenden Erfindung liegt deshalb die Aufgabe zugrunde, die eingangs beschriebene bekannte Dosierpumpe dahingehend zu verbessern, daß sie hinsichtlich ihrer Einbauposition wesentlich flexibler wird und daß insbesondere die Zugänglichkeit des Stellgliedes für den Steuerschieber bei allen denkbaren Einbaupositionen gewahrt ist. Desweiteren soll sich die erfindungsgemäße Dosierpumpe durch hohe Montagefreundlichkeit auszeichnen.

Ausgehend von einer Pumpe mit den eingangs genannten Merkmalen wird diese Aufgabe erfindungsgemäß dadurch gelöst, daß das Stellglied für den Steuerschieber nicht mehr wie bisher im Getriebegehäuse, sondern statt dessen im Kolbenflansch des Pumpengehäuses gelagert ist und daß die Befestigungselemente zur Montage des Kolbenflansches am Getriebegehäuse bezüglich der Achse des Kolbenflansches symmetrisch angeordnet sind.

Hierdurch ergibt sich der Vorteil daß der Kolbenflansch in zumindest zwei bezüglich seiner Achse um 180 Grad versetzten Stellungen am Getriebegehäuse montiert und demzufolge das Stellglied stets an die besser geeignete Seite der Pumpe verlegt werden kann. Dies kann bei manueller Betätigung des Stellgliedes die besser zugängliche, also in der Regel die Vorderseite der Pumpe sein, dies kann aber bei elektrischer oder pneumatischer Hubverstellung, die über Stehbolzen an die Pumpe anzuflanschen ist, auch eine andere Seite sein, wo bessere Platzverhältnisse herrschen. Außerdem kann hierdurch der gleiche Kolbenflansch sowohl für Links- wie auch für Rechts-Anbau an das Getriebegehäuse verwendet werden, ohne daß das Stellglied von entgegengesetzten Pumpenseiten bedient werden muß, wie dies bisher der Fall war. Die erfindungsgemäße Dosierpumpe ist somit wesentlich flexibler in ihren Einbaumöglichkeiten.

Desweiteren bietet die Erfindung den Vorteil daß bei einer Demontage des Kolbenflansches keine Nullpunktkorrektur mehr notwendig ist, weil die Zuordnung zwischen Stellglied, Steuerschieber und Kolbenflansch gewahrt bleibt.

Zur präzisen Einstellung des Nullpunktes empfiehlt es sich, daß zwischen dem Stellknopf des Stellgliedes und seiner Skalenscheibe eine stufenlose Klemmverbindung vorgesehen ist. Dies kann beispielsweise über eine von außen zugängliche Madenschraube oder dergleichen erfolgen.

Damit der Kolbenflansch in seinen beiden Anbaupositionenvöllig gleichwertig ist, ist vorzugsweise gegenüber der bisher üblichen Ölablaßbohrung im unteren Bereich des Kolbenflansches eine weitere Ölablaßbohrung angeordnet. Je nach Einbaulage wird dann die untere dieser beiden Bohrungen aktiviert.

Im allgemeinen ist der Hubkolben durch eine Feder gegenüber seinem Antrieb verspannt. Diese Feder stützt sich andererseits an der Membran ab. Muß die Membran ausgewechselt werden, so muß die Feder manuell in den Kolbenflanschen hineingedrückt werden, damit die Membran lagegerecht und ohne Verzug am Kolbenflansch festgeschraubt werden kann.

Hier wird in Weiterbildung der Erfindung dadurch Abhilfe geschaffen, daß sich die Feder nicht mehr an der Membran, sondern an einer gelochten Halteplatte abstützt, die an der Innenseite der Membran mit dem Kolbenflansch verbunden ist. Dadurch wird der Membran-Austausch erheblich erleichtert und ihr richtiger, verspannungsfreier Einbau gewährleistet.

Weitere Merkmale und Vorteile der Erfindung ergeben sich aus der nachfolgenden Beschreibung eines Ausführungsbeispieles anhand der Zeichnung; dabei zeigt

Fig. 1 einen vertikalen Längsschnitt durch eine Dosierpumpe mit zwei Dosiereinheiten;

Fig. 2 einen vergrößerten horizontalen Längsschnitt mit dem Stellglied und

Fig. 3 einen Querschnitt durch den Kolbenflansch im Bereich des Stellgliedes.

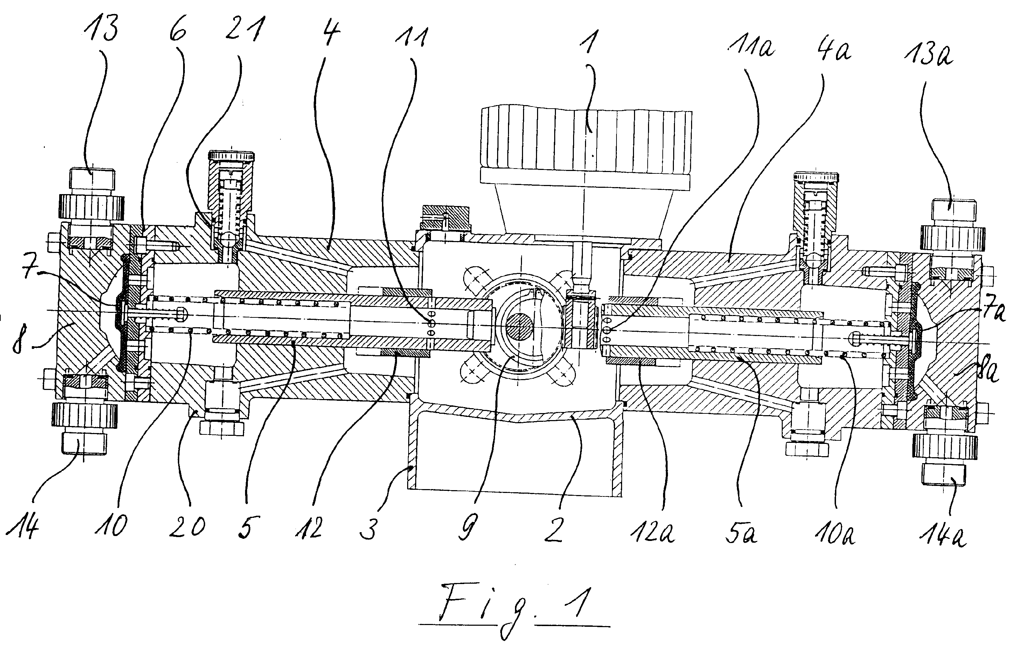

Gemäß Fig. 1 besteht die Dosierpumpe aus einem Antriebsmotor 1, der an ein Getriebegehäuse 2 mit einem Montagefuß 3 angeflanscht ist. Zu bei den Seiten des Getriebege häuses 2 ist ein Kolbenflansch 4 bzw. 4a montiert, in dem ein hohler Hubkolben 5 bzw. 5a verschiebbar geführt ist. Die äußeren Enden des Kolbenflansches 4 bzw. 4a sind durch Lochscheiben 6 bzw. 6a und jeweils eine Membran 7 bzw. 7a gegenüber den Dosierköpfen 8 bzw. 8a abgeschlossen.

Der Innenraum des Getriebegehäuses 2 und der beiden Kolbenflansche 4 und 4a ist mit einer Betriebsflüssigkeit gefüllt, die durch die Hubbewegung der Kolben 5 und 5a umgewälzt wird. Diese Hubbewegung wird in an sich bekannter Weise durch eine vom Motor 1 angetriebene Excenterscheibe 9 erzeugt, gegenüber der die Kolben 5 und 5a durch Federn 10 bzw. 10a verspannt sind.

Wird beispielsweise der Kolben 5 nach links verschoben, so kann die aus dem linken Hohlraum des Kolbenflansches verdrängte Betriebsflüssigkeit über die Steuerbohrungen 11 zurückfließen, so daß die Membran 7 in Ruhe bleibt. Ab einer bestimmten Hubposition werden diese Steuerbohrungen jedoch von dem Steuerschieber 12 verschlossen, die Membran 7 wird somit in den Dosierkopf 8 hineingedrückt und verdrängt die dort befindliche Förderflüssig keit in der gewünschten Menge über das Druckventil 13 in die Förderleitung.

Beim Rückhub wird die Membran wieder zurückgezogen und saugt über das Saugventil 14 das vorgegebene Quantum neuer Förderflüssigkeit nach.

Der selbe Vorgang spielt sich Phasenverschoben im rechten Dosierkopf 8a ab.

Da all diese Vorgänge bereits bekannt sind, braucht hierauf nicht weiter eingegangen zu werden.

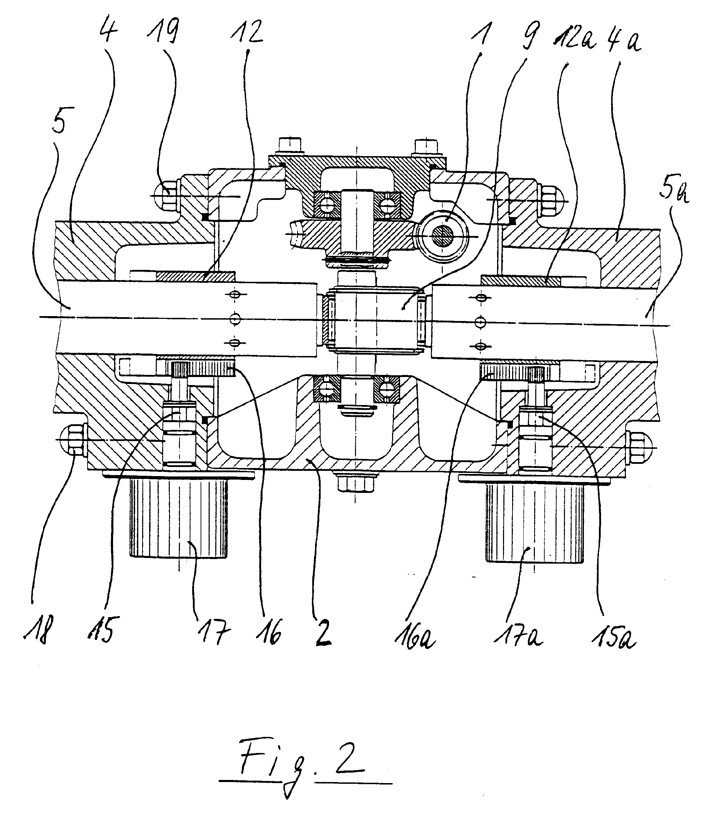

Wesentlich ist nun, daß die Verstellung der Dosiermenge nicht mehr über das Getriebegehäuse, sondern über den Kolbenflansch 4 bzw. 4a erfolgt. Hierzu wird auf Fig. 2 verwiesen.

Wie man sieht, ist der Kolbenflansch 4 bzw. 4a axial etwas verlängert und lokal in seiner Wanddicke verstärkt, so daß er als Träger für das Stellglied 15 bzw. 15a fungieren kann. Das Stellglied ist als Drehspindel ausgebildet und greift in ansich bekannter Weise in eine verzahnte Längsnut 16 des Steuerschiebers 12 ein. Die Verdrehung des Stellknopfes 17 bewirkt somit in an sich bekannter Weise die Verschiebung des Steuerschiebers im Sinne einer größeren oder kleineren Dosierleistung.

Wesentlich ist außerdem, daß die Befestigungsschrauben für die Montage des Kolbenflansches am Getriebegehäuse, von denen hier zwei Schrauben 18 und 19 sichtbar sind, derart zueinander symmetrisch angeordnet sind, daß der Kolbenflansch in zumindest zwei um 180 Grad verdrehten, vorzugsweise auch in vier um 90 Grad verdrehten Positionen am Getriebegehäuse 2 montiert werden kann. Die Pumpe ist damit optimal an die jeweiligen Einbauverhältnisse anzupassen.

Schließlich ist in Fig. 1 noch zu erkennen, daß sich die Feder 10 nicht direkt an der Membran 7 abstützt, sondern an zwischengeschalteten Lochplatten 6, die fest mit dem Kolbenflansch 4 verbunden sind. Dadurch wird, wie oben erwähnt, der Austausch der Membran 7 erheblich vereinfacht.

Außerdem zeigt Fig. 1, daß gegenüber der unteren Ölablaßschraube 20 eine gleichartige Bohrung 21 im Gehäuse des Kolbenflansches angeordnet ist. Dadurch kann je nach Einbauposition des Kolbenflansches jeweils die untere Bohrung für den Ölablaß, die obere Bohrung zum Einbau eines Überdruckventiles verwendet werden. Es ist dabei ledigich zu beachten, daß beide Bohrungen sowohl an den linken wie auch an den rechten Innenraum des Hohlkolbens angeschlossen sind.

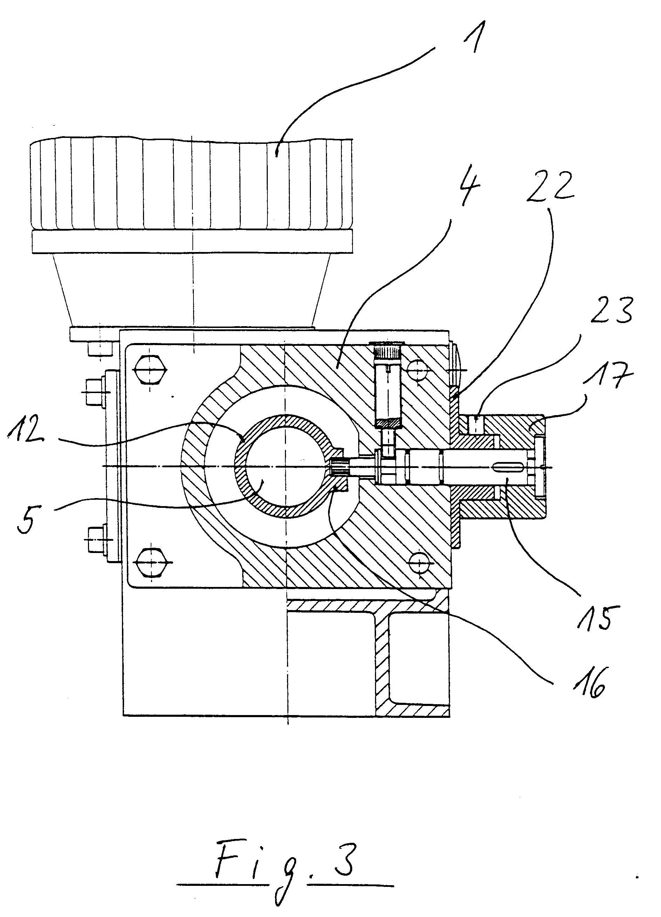

Fig. 3 verdeutlicht den Aufbau des Stellgliedes 15. Wie man sieht, befindet sich axial neben dem Stellknopf 17 eine seperate Skalenscheibe 22. Sie ist verdrehbar auf dem Stellglied gelagert, kann aber durch eine Madenschraube 23 am Stellglied fixiert werden, so daß eine stufenlose Anpassung des Nullpunktes an die aktuellen Betriebsbedingungen der Pumpe möglich ist.

3

Im Ausführungsbeispiel sind die Befestigungselemente 18 und 19 zur Montage der Kolbenflansche 4 bzw. 4a am Getriebegehäuse 2 an den Ecken eines Rechteckes positioniert (vergleiche Fig. 3) so daß die Kolbenflansche jeweils in zwei um 180° verschwenkten Positionen montiert werden können. Selbstverständlich können die Befestigungselemente 18 und 19 statt dessen auch an den Ecken eines Quadrates positioniert sein, wenn die Kolbenflansche in jeweils vier um 90° versetzten Stellungen montierbar sein sollen. Im letztgenannten Fall sind dann zweckmäßig auch die Haltebohrungen für die Montage des Dosierkopfes 8 bzw. 8a so anzuordnen, daß jeder Dosierkopf um 90° verschwenkt montiert werden kann.

Die Erfindung gestattet es also, die Kolbenflansche unabhängig voneinander und insbesondere unabhängig von der Einbauposition des Getriebegehäuses so zu montieren, daß das Stellglied für den Steuerschieber stets optimal zugänglich ist.


**Patentansprüche**

1. Dosierpumpe mit einem hohlen Hubkolben, dessen Innenraum über Steuerbohrungen mit dem Innenraum des Pumpengehäuses in Verbindung steht, wobei das Pumpengehäuse aus einem Getriebegehäuse mit dem Pumpenantrieb und einem daran angeflanschten, den Hubkolben führenden Kolbenflansch besteht, der seinerseits einen Dosierkopf trägt, in dem das Fördermedium strömt, das durch ein dichtes elastisches Element, insbesondere eine Membran, von einer im Pumpengehäuse zirkulierenden, die Dosierung des Fördermediums bewirkenden Betriebsflüssigkeit getrennt ist, wobei die Dosierleistung durch einen Steuerschieber verstellbar ist, der die Steuerbohrungen des Hubkolbens ab einer bestimmten Hubposition verschließt und wobei die Verstellung des Steuerschiebers durch ein das Pumpengehäuse durchquerendes Stellglied erfolgt, dadurch gekennzeichnet,
daß das Stellglied (15, 15a) für den Steuerschieber (12, 12a) im Kolbenflansch (4, 4a) des Pumpengehäuses gelagert ist und daß die Befestigungselemente (18, 19) zur Montage des Kolbenflansches (4, 4a) am Getriebegehäuse (2) bezüglich ihrer Mittelebenen symmetrisch angeordnet sind.

2. Dosierpumpe nach Anspruch 1, wobei das Stellglied (15, 15a) an seinem äußeren Ende einen Stellknopf (17, 17a) mit Skalenscheibe (22, 22a) aufweist,
dadurch gekennzeichnet,
daß zwischen dem Stellknopf (17, 17a) und der Skalenscheibe (22, 22a) eine stufenlose Klemmverbindung (23) angeordnet ist.

3. Dosierpumpe nach Anspruch 1 oder 2, wobei der Kolbenflansch (4, 4a) in seinem unteren Bereich eine Ölablaßbohrungen (20) aufweist,
dadurch gekennzeichnet,
daß gegenüberliegend eine weitere Bohrung (21) angeordnet ist.

4. Dosierpumpe nach Anspruch 3,
dadurch gekennzeichnet,
daß in die Bohrung (20, 21) wahlweise ein Überdruckventil einschraubbar ist.

5. Dosierpumpe nach einem der vorhergehenden Ansprüche, wobei der Hubkolben (5, 5a) durch eine Feder (10, 10a) gegenüber seinem Antrieb (9) verspannt ist, insbesondere nach Anspruch 1,
dadurch gekennzeichnet,
daß sich die Feder (10, 10a) an einer an der Innenseite der Membran (7, 7a) angeordneten, gelochten Halteplatte (6, 6a) abstützt.

6. Dosierpumpe nach einem der vorhergehenden Ansprüche,
dadurch gekennzeichnet,
daß der Dosierkopf (8, 8a) in 2 um 180 Grad verdrehten oder in 4 um 90 Grad verdrehten Positionen an seinem Kolbenflansch montierbar ist.


**Claims**

1. Metering pump with a hollow piston whose interior communicates via control bores with the interior of the pump housing, wherein the pump housing consists of a gearbox with the pump drive and a piston flange flange-mounted on said drive and guiding the piston, which piston flange in turn carries a metering head in which the pumping medium flows, said medium being separated by a tight elastic element, in particular a membrane, from a working fluid circulating in the pump housing and effecting the metering of the pumping medium, wherein the metering performance can be regulated by a control slide valve that closes the control bores of the piston at a certain stroke position and wherein the control slide valve is adjusted by a regulating unit traversing the

EP 0 375 848 B1

pump housing,
characterized in that
the regulating unit (15, 15a) for the control slide valve (12, 12a) is mounted in the piston flange (4, 4a) of the pump housing, and that the securing elements (18, 19) for mounting the piston flange (4, 4a) on the gearbox (2) are symmetrically arranged relative to their centre plane.

2. Metering pump according to Claim 1, in which the regulating unit (15, 15a) has on its external end an adjusting knob (17, 17a) with a scale (22, 22a),
characterized in that
a continuously adjustable clamping connection (23) is arranged between the adjusting knob (17, 17a) and the scale (22, 22a).

3. Metering pump according to Claim 1 or 2, in which the piston flange (4, 4a) has in its lower region an oil drainage bore (20),
characterized in that
a further bore (21) is arranged opposite the latter.

4. Metering pump according to Claim 3,
characterized in that
an excess pressure valve can if desired be screwed into the bore (20, 21).

5. Metering pump according to one of the preceding claims, in particular Claim 1, in which the piston (5, 5a) is clamped by a spring (10, 10a) against its drive (9),
characterized in that
the spring (10, 10a) abuts a perforated retaining plate (6, 6a) arranged on the inside of the membrane (7, 7a).

6. Metering pump according to one of the preceding claims,
characterized in that
the metering head (8, 8a) can be mounted on its piston flange in two positions rotated by 180 degrees, or in four position rotated by 90 degrees.


**Revendications**

1. Pompe de dosage comportant un piston alternatif creux, dont la cavité intérieure est raccordée par l'intermédiaire de perçages de commande, à l'espace intérieur du carter de pompe, et dans laquelle le carter de pompe est constitué par un carter de transmission comportant le dispositif d'entraînement de la pompe, et une bride de piston, qui est raccordée par bride à ce dispositif d'entraînement et guide le piston alternatif et porte, pour sa part, une tête de dosage dans laquelle circule le liquide refoulé qui est séparé, par un élément étanche élastique, notamment une membrane, d'un liquide de service circulant dans le carter de pompe et réalisant le dosage du liquide refoulé, et dans laquelle la puissance de dosage est réglable à l'aide d'un poussoir de commande, qui ferme les perçages de commande du piston alternatif à partir d'une position déterminée dans la course de déplacement, et dans laquelle le réglage du poussoir de commande est réalisé au moyen d'un organe de réglage traversant le carter de pompe,
caractérisée en ce
que l'organe de réglage (15,15a) pour le poussoir de commande (12,12a) est monté dans la bride de piston (4,4a) du carter de pompe et que les éléments de fixation (18,19) pour le montage de la bride de piston (4,4a) sur le carter de transmission (2) sont disposés symétriquement par rapport à leurs plans médians.

2. Pompe de dosage selon la revendication 1, dans laquelle l'organe de réglage (15,15a) possède, sur son extrémité extérieure, un bouton de réglage (17,17a) possédant un cadran (22,22a),
caractérisée par le fait
qu'un dispositif de liaison progressive à serrage (23) est disposé entre le bouton de réglage (17,17a) et le cadran (22,22a).

3. Pompe de dosage selon la revendication 1 ou 2, dans laquelle la bride de piston (4,4a) possède, dans sa partie inférieure, des perçages d'évacuation d'huile (20),
caractérisée en ce
qu'un autre perçage (21) est disposé à l'opposé desdits perçages.

4. Pompe de dosage selon la revendication 3,
caractérisée en ce
qu'au choix une soupape de sûreté peut être serrée à l'état vissé dans le perçage (20,21).

5. Pompe de dosage selon l'une des revendications précédentes, dans laquelle le piston alternatif (5,5a) est repoussé contre son dispositif d'entraînement (9) au moyen d'un ressort (10,10a), notamment selon la revendication 1,

caractérisée en ce
que le ressort (10,10a) prend appui sur une plaque perforée de retenue (6,6b), disposée sur la face intérieure de la membrane (7,7a).

6. Pompe de dosage selon l'une des revendications précédentes,

caractérisée en ce
que la tête de dosage (8,8a) peut être montée dans 2 positions pivotées de 180 degrés ou dans 4 positions pivotées de 190 degrés, sur sa bride de piston.

Fig. 1

Fig. 2

Fig.3